# EUROPÄISCHE PATENTSCHRIFT

(11) **EP 1 342 303 B1**
(45) Veröffentlichungstag und Bekanntmachung des Hinweises auf die Patenterteilung: **12.10.2005**
(21) Anmeldenummer: 01985791.1
(22) Anmeldetag: 12.12.2001
(51) Int. Cl.: H02H 1/00, H04L 5/14

(54) **ANORDNUNG UND VERFAHREN ZUR DATENÜBERTRAGUNG VON DIGITALEN ÜBERTRAGUNGSDATEN**
SYSTEM AND METHOD FOR THE DATA TRANSMISSION OF DIGITAL TRANSMISSION DATA
DISPOSITIF ET PROCEDE PERMETTANT DE TRANSMETTRE DES DONNEES DE TRANSMISSION NUMERIQUES

(30) Priorität: 13.12.2000 DE 10062762
(43) Veröffentlichungstag der Anmeldung: 10.09.2003
(73) Patentinhaber: SIEMENS AKTIENGESELLSCHAFT, 80333 München (DE)
(72) Erfinder: FRANK, Andre, 15366 Neuenhagen (DE); RISSLAND, Volker, 16727 Marwitz (DE)
(86) Internationale Anmeldenummer: PCT/DE2001/004772
(87) Internationale Veröffentlichungsnummer: WO 2002/049176

(56) Entgegenhaltungen:
- EP-A- 0 222 682
- EP-A- 0 691 796
- US-A- 4 964 118

## Beschreibung

Die Erfindung betrifft eine Anordnung zur Datenübertragung von digitalen Übertragungsdaten zwischen einem ersten digitalen Schutzgerät und einem zweiten digitalen Schutzgerät an einem Abschnitt einer Energieversorgungsleitung in Senderichtung und in Empfangsrichtung, wobei das erste digitale Schutzgerät über eine erste Koppelvorrichtung an einem Ende einer elektrischen Datenübertragungsleitung angeschlossen ist und das zweite Schutzgerät über eine zweite Koppelvorrichtung an das andere Ende der elektrischen Datenübertragungsleitung angeschlossen ist.

Eine solche Vorrichtung ist bekannt aus der Produktschrift "Leitungs-Differentialschutzeinrichtung PQ 741", Bild 7, Seite 11 der Fa. Alstorn (unter "http://www.tde.alstom.com/pc/bases/gr/products.nsf/e47708d69e62a70480256816003800f3/372f 6914871f304bc1256841002cdaa1?OpenDocument" abrufbar unter "Datenblatt (6)" in Deutsch, Dateiname "PQ741_06_05511GR.pdf"). Bei der bekannten Vorrichtung ist ein erstes digitales Schutzgerät am Ende eines ersten Abschnitts einer elektrischen Energieübertragungsleitung angeordnet. Am anderen Ende des Abschnitts der elektrischen Energieversorgungsleitung ist ein zweites digitales Schutzgerät vorgesehen. Beide Schutzgeräte bilden einen Differentialschutz zur Überwachung des Abschnitts auf einen Fehler. Zur Ausübung der Differentialschutzfunktion sind die beiden Schutzgeräte zur Datenübertragung miteinander verbunden. Das erste digitale Schutzgerät ist dazu über eine Koppelvorrichtung an das eine Ende einer zweipaarigen elektrischen Datenübertragungsleitung angeschlossen. Mit dem anderen Ende der zweipaarigen elektrischen Datenübertragungsleitung ist das zweite digitale Schutzgerät über eine zweite Koppelvorrichtung verbunden. Die Datenübertragung zwischen den beiden Koppelvorrichtungen erfolgt nach einem speziellen Datenübertragungsprotokoll. Die beiden Koppelvorrichtungen sind dabei speziell für die digitale Datenübertragung zwischen den beiden Schutzgeräten über die elektrische Datenübertragungsleitung ausgelegt. Dabei wird zur Übertragung von digitalen Daten von der ersten Koppelvorrichtung in Richtung zur zweiten Koppelvorrichtung das eine Paar der elektrischen Datenübertragungsleitung verwendet. Für die digitale Datenübertragung von der zweiten Koppelvorrichtung zur ersten Koppelvorrichtung ist das andere Paar der elektrischen Datenübertragungsleitung vorgesehen. Durch die jeweils spezielle Auslegung der Koppelvorrichtungen ist eine Datenübertragung zwischen den beiden Koppelvorrichtungen auf der zweipaarigen, elektrischen Datenübertragungsleitung über eine Datenübertragungsleitungslänge von bis zu 15 km möglich.

Aufgabe der Erfindung ist es eine Anordnung der eingangs genannten Art anzugeben, mit der eine Datenübertragung mit vergleichsweise geringerem Aufwand möglich ist.

Diese Aufgabe wird bei einer Anordnung der eingangs genannten Art erfindungsgemäß dadurch gelöst, dass die elektrische Datenübertragungsleitung eine einpaarige Leitung ist, und dass beide Koppelvorrichtungen derart ausgebildet sind, dass zwischen ihnen eine Übertragung von digitalen Übertragungsdaten in Sende- und Empfangsrichtung auf der einpaarigen Datenübertragungsleitung nach Art einer digitalen Telekommunikationsdatenübertragung zwischen einerseits einer digitalen Netzabschlusseinrichtung eines digitalen Teilnehmerendanschlusses eines digitalen Telekommunikationsnetzes und andererseits einer mit der digitalen Netzabschlusseinrichtung über eine elektrische Teilnehmeranschlussleitung verbundenen digitalen Leitungsabschlusseinrichtung einer digitalen Vermittlungsstelle des digitalen Telekommunikationsnetzes durchführbar ist.

Solche Telekommunikationsdatenübertragungen sind beispielsweise in Gerd Siegmund, "Technik der Netze", Heidelberg, 1999, ISBN 3-7785-2637-5, im folgenden als "Technik der Netze" bezeichnet, beschrieben.

In EP-A-0 222 682 wird eine Anordnung zur Datenübertragung von Übertragungsdaten zwischen einem ersten digitalen Schutzgerät und einem zweiten digitalen Schutzgerät an einem Abschnitt einer Energieversorgungsleitung offenbart, bei der analoge Signale über eine einpaarige Übertragungsleitung übertragen werden.

Da die Koppelvorrichtungen erfindungsgemäß derart ausgebildet sind, dass zwischen ihnen eine Übertragung von digitalen Übertragungsdaten in Sende- und Empfangsrichtung auf der einpaarigen Datenübertragungsleitung nach Art einer digitalen Telekommunikationsdatenübertragung zwischen einerseits einer digitalen Netzabschlusseinrichtung eines digitalen Teilnehmerendanschlusses eines digitalen Telekommunikationsnetzes und andererseits einer mit der digitalen Netzabschlusseinrichtung über eine elektrische Teilnehmeranschlussleitung verbundenen digitalen Leitungsabschlusseinrichtung einer digitalen Vermittlungsstelle des digitalen Telekommunikationsnetzes durchführbar ist, können die Koppelvorrichtungen mit zu diesem Zweck bei Telekommunikationsnetzen verwendeten Standardbausteinen aufgebaut sein, die durch die große Verbreitung der digitalen Telekommunikation kostengünstig und zuverlässig sind, so dass die Koppelvorrichtungen der erfindungsgemässen Anordnung im

Vergleich zu den Koppelvorrichtungen nach dem Stand der Technik sehr viel kostengünstiger ausgeführt sein können. Insgesamt ergibt sich also eine erhebliche Verringerung des Aufwands bei der erfindungsgemässen Anordnung gegenüber dem Stand der Technik.

Die Datenübertragung zwischen den beiden Koppelvorrichtungen erfolgt über die einpaarige elektrische Datenübertragungsleitung sowohl in Sende- als auch in Empfangsrichtung, also von der ersten Koppelvorrichtung zur zweiten Koppelvorrichtung und umgekehrt. Um hierbei die in Senderichtung gesendeten Übertragungsdaten von den in Empfangsrichtung empfangenen Übertragungsdaten zu trennen, sind zwei prinzipiell an sich bekannte Verfahren mit entsprechend ausgebildeten Koppelvorrichtungen in vorteilhafter Weise anwendbar. Zum einen können beide Koppelvorrichtungen jeweils entsprechend abwechselnd senden und empfangen, so dass keine gleichzeitige Übertragung von der ersten Koppelvorrichtung zur zweiten Koppelvorrichtung und umgekehrt stattfindet. Dabei müssen sich die beiden Koppelvorrichtungen zeitlich sehr schnell hinsichtlich des Sendens und des Empfangens abwechseln, damit eine ungestörte Datenübertragung über die einpaarige elektrische Datenübertragungsleitung möglich ist. Dieses Verfahren wird auch als Zeitgetrenntlageverfahren oder "Ping-Pong-Verfahren" bezeichnet. Zur Durchführung dieses Verfahrens weisen die Koppelvorrichtungen entsprechende Mittel zum zeitlich nacheinander Senden und Empfangen auf; diese sind an sich bekannt.

Bei dem zweiten Verfahren handelt es sich um das sogenannte Echokompensationsverfahren, bei dem auf der einpaarigen Datenübertragungsleitung gleichzeitig gesendet und empfangen wird. Zur Durchführung dieses Verfahrens weist jede Koppelvorrichtung Mittel zur Trennung der in Senderichtung gesendeten Übertragungsdaten von den in Empfangsrichtung übertragenen Übertragungsdaten, Mittel zur Echokompensation von aus der Datenübertragungsleitung auftretenden Übertragungsdatenechos und Mittel zur Verwürfelung der zu übertragenden digitalen Übertragungsdaten auf. Die Mittel zur Trennung von Senderichtung und Empfangsrichtung sind beispielsweise unter den Bezeichnungen Gabelschaltung oder Hybridschaltung bekannt. Um durch die Mittel zur Trennung der Sende- und der Empfangsrichtung möglicherweise auf der Datenübertragungsleitung auftretende Übertragungsdatenechos zu kompensieren, sind zusätzlich Mittel zur Echokompensation vorgesehen. Da es bei der Echokompensation eine wesentliche Rolle spielt, dass die in Senderichtung zu sendenden Übertragungsdaten statistisch unabhängig von den in Empfangsrichtung empfangenen Übertragungsdaten sind, sind die Mittel zur Verwürfelung vorgesehen, mit denen die als Übertragungsdaten zu sendenden Daten beispielsweise in ihrer Reihenfolge gezielt derart verändert ("verwürfelt") werden, das statistische Unabhängigkeit von den in Empfangsrichtung empfangenden Übertragungsdaten gegeben ist. Dabei stimmen sich beide Koppelvorrichtungen über ihre jeweilige Art der "Verwürfelung" ab bzw. sind entsprechend voreingestellt. Die Mittel zur Trennung der in Senderichtung gesendeten Übertragungsdaten von den in Empfangsrichtung übertragenen Übertragungsdaten, die Mittel zur Echokompensation und die Mittel zur Verwürfelung sowie Datenreduktion sind aus dem Stand der Technik, beispielsweise "Technik der Netze", Seite 404 unter der Überschrift "Richtungstrennungsverfahren" bekannt. Durch das Vorsehen dieser Mittel können sowohl in Senderichtung als auch in Empfangsrichtung gleichzeitig digitale Daten übertragen werden, so dass keine Wartezeiten entstehen, wie sie bei dem Zeitgetrenntlageverfahren zwischen dem Senden und dem Empfangen auftreten.

Bevorzugt weisen die Koppelvorrichtungen Mittel zur Datenreduktion der zu übertragenden digitalen Übertragungsdaten auf. Die Mittel zur Datenreduktion ermöglichen eine Erhöhung der Datenübertragungsgeschwindigkeit, so dass über die elektrische einpaarige Datenübertragungsleitung mit hoher Datenübertragungsgeschwindigkeit übertragen werden kann.

Bevorzugt weisen die Mittel zur Echokompensation ein adaptives Transversalfilter auf. Ein solches adaptives Transversalfilter ist beispielsweise aus "Technik der Netze", Seite 406 bekannt. Der Vorteil eines solchen adaptiven Transversalfilters liegt darin, dass es zur Echokompensation an die individuellen physikalischen Gegebenheiten der einpaarigen elektrischen Datenübertragungsleitung automatisch angepasst werden kann.

Vorzugsweise weisen die Koppelvorrichtungen jeweils eine U-Schnittstelle auf, an die die einpaarige Datenübertragungsleitung angeschlossen ist. Die U-Schnittstelle ist eine gängige und genormte digitale Datenübertragungsschnittstelle für ein digitales Telekommunikationsnetz. Sie ist beispielsweise in "Technik der Netze", Seite 403 ff. beschrieben. Im Telekommunikationsnetz der Fa. Deutsche Telekom wird die U-Schnittstelle auch als Uₖ₀-Schnittstelle bezeichnet.

Bevorzugtermaßen weisen die Koppelvorrichtungen jeweils einen ISDN-Baustein mit einer IOM2-Schnittstelle und einer Ausgangsschnittstelle auf, wobei die IOM2-Schnittstelle mit dem jeweiligen digitalen Schutzgerät verbunden ist und die Ausgangsschnittstelle mit der einpaarigen Datenübertragungsleitung verbunden ist.

Ein solcher ISDN-Baustein ist ein handelsüblicher Baustein, der entsprechend preiswert ist, wodurch nur geringe Kosten zur Ausbildung der Koppelvorrichtungen anfallen. Ein Beispiel für einen solchen Baustein ist der PEB 2091 der Siemens AG bzw. der Infineon AG (vergl. User's Manual "ICs for Communications, ISDN Echocancellation Circuit, IEC-Q, PEB 2091, Version 4.3", 02.95). Die IOM2-Schnittstelle ("extended ISDN oriented modular"-Schnittstelle) ist allgemein aus der ISDN-Technik und auch aus dem vorgenannten User's Manual bekannt.

Die zwischen dem digitalen Schutzgerät und der zugeordneten Koppelvorrichtung übertragenen Daten (Schutzgerätedaten) können beispielsweise nach einem speziellen Datenübertragungsprotokoll, insbesondere dem HDLC-Protokoll kodiert sein. Zu einer Übertragung auf der Datenübertragungsleitung werden diese Daten mit dem ISDN-Schnittstellenbaustein in die Übertragungsdaten umgesetzt. Dazu werden die Schutzgerätedaten der IOM2-Schnittstelle des ISDN-Schnittstellenbausteins zugeführt. Dabei besteht zum einen die Möglichkeit, dass die Schutzgerätedaten von dem ihnen eigenen Datenübertragungsprotokoll speziell in Daten umgewandelt werden, die dem IOM2-Protokoll der IOM2-Schnittstelle entsprechen. Zu einer solchen Umwandlung ist in der Regel ein Umsetzbaustein erforderlich. In dem ISDN-Baustein werden diese an der IOM2-Schnittstelle angelegten Daten in die Übertragungsdaten umgesetzt. Vorzugsweise sind jedoch die digitalen Schutzgeräte unmittelbar mit der IOM2-Schnittstelle verbunden. Die Schutzgerätedaten werden der IOM2-Schnittstelle als zu übertragende Daten zugeführt. Dabei erfolgt keine Umsetzung der Schutzgerätedaten hinsichtlich ihres Datenübertragungsprotokolls, sondern die Schutzgerätedaten werden insgesamt so behandelt, wie üblicherweise zwischen einer Netzabschlusseinrichtung und einer Leitungsabschlusseinrichtung übertragene reine Nutzdaten behandelt werden. Mit anderen Worten: Die Schutzgerätedaten werden in ihrer kodierten Form belassen und wie zu übertragene Nutzdaten behandelt und von dem ISDN-Schnittstellenbaustein ohne vorherige Umcodierung in Übertragungsdaten umgesetzt.

Bevorzugt ist die einpaarige Datenübertragungsleitung parallel zum Abschnitt der Energieversorgungsleitung vorgesehen. Bei der Anordnung zur Datenübertragung kann somit beispielsweise eine schon vorhandene parallel zum Abschnitt der Energieversorgungsleitung vorgesehene Datenübertragungsleitung verwendet werden.

Die Erfindung betrifft auch ein Verfahren zur Übertragung von digitalen Übertragungsdaten.

Ein solches Verfahren zur Übertragung von digitalen Übertragungsdaten ist ebenfalls aus der schon eingangs genannten Produktschrift der Fa. Alstom bekannt. Dabei werden die zwischen zwei Koppelvorrichtungen zu übertragenen Übertragungsdaten nach einem speziellen Datenübertragungsprotokoll kodiert. Für die Senderichtung und die Empfangesrichtung wird dabei jeweils ein eigener Übertragungsweg, jeweils gebildet mit einem Paar einer zweipaarigen Datenübertragungsleitung verwendet.

Hinsichtlich des Verfahrens ist die Aufgabe der Erfindung, ein Verfahren zur Übertragung von Übertragungsdaten anzugeben, mit dem mit vergleichsweise geringem Aufwand eine Übertragung der Übertragungsdaten möglich ist.

Diese Aufgabe wird mit einem Verfahren zur Übertragung von Übertragungsdaten in Sende- und Empfangsrichtung zwischen einem ersten digitalen Schutzgerät und einem zweiten digitalen Schutzgerät, die voneinander entfernt und an einem Abschnitt einer Energieversorgungsleitung angeordnet sind und die über jeweils eine zugeordnete Koppelvorrichtung an jeweils einem Ende einer einpaarigen elektrischen Datenübertragungsleitung angeschlossen sind, wobei die Übertragungsdaten zwischen den Koppelvorrichtungen in Sende- und Empfangsrichtung auf der einpaarigen Datenübertragungsleitung nach Art einer digitalen Telekommunikationsdatenübertragung zwischen einerseits einer digitalen Netzabschlusseinrichtung eines digitalen Teilnehmerendanschlusses eines digitalen Telekommunikationsnetzes und andererseits einer mit der digitalen Netzabschlusseinrichtung über eine elektrische Teilnehmeranschlussleitung verbundenen digitalen Leitungsabschlusseinrichtung einer digitalen Vermittlungsstelle des digitalen Telekommunikationsnetzes übertragen werden, gelöst.

Dadurch, dass eine Datenübertragung zwischen den Koppelvorrichtungen in Sende- und Empfangsrichtung nach Art einer digitalen Telekommunikationsdatenübertragung zwischen einerseits einer digitalen Netzabschlusseinrichtung eines digitalen Teilnehmerendanschlusses eines digitalen Telekommunikationsnetzes und andererseits einer mit der digitalen Netzabschlusseinrichtung über eine elektrische Teilnehmeranschlussleitung verbundenen digitalen Leitungsabschlusseinrichtung einer digitalen Vermittlungsstelle des digitalen Telekommunikationsnetzes erfolgt, kann zum einen eine Datenübertragung über eine einpaarige Datenübertragungsleitung erfolgen und zum zweiten können zur Durchführung des Verfahrens gängige in der Telekommunikationstechnik weitläufig verwendete Bauelemente für die Koppelvorrichtungen verwendet werden, so dass eine vergleichsweise kostengünstige Datenübertragung zwischen den beiden Koppelvorrichtungen ermöglicht ist. Dadurch ist auch der verfahrensmäßige Aufwand erheblich verringert, weil hier ein Übertragungsweg eingespart wird und kein spezielles Datenübertragungsprotokoll, sondern ein gängiges und daher einfach einzusetzendes und zuverlässiges Verfahren zur Anwendung kommt.

Vorzugsweise wird bei der Datenübertragung zwischen den beiden Koppelvorrichtungen zur Trennung der Senderichtung von der Empfangsrichtung ein Zeitgetrenntlagerverfahren durchgeführt. Dadurch können die in Senderichtung gesendeten Übertragungsdaten besonders einfach von dem in Empfangsrichtung gesendeten Übertragungsdaten getrennt werden.

Besonders bevorzugt wird jedoch bei der Datenübertragung zwischen den beiden Koppelvorrichtungen in jeder der Koppelvorrichtung eine Trennung der Senderichtung von der Empfangsrichtung nach dem Echokompensationsverfahren vorgenommen, wobei ein Verwürfelungsverfahren zur Herstellung der statistischen Unabhängigkeit der in Senderichtung zu übertragenen Übertragungsdaten von den in Empfangsrichtung übertragenen Übertragungsdaten durchgeführt wird. Diese Verfahren sind aus der digitalen Telekommunikationstechnik weitläufig, beispielsweise aus "Technik der Netze", Seite 404 bekannt. Durch die Anwendung dieser Verfahren, kann gleichzeitig eine Sendung von Übertragungsdaten sowohl in Senderichtung als auch in Empfangsrichtung erfolgen.

Vorzugsweise wird bei der Datenübertragung ein Kodier/Dekodier-Verfahren zur Datenreduktion durchgeführt. Dadurch kann die Datenübertragungsgeschwindigkeit zwischen den beiden Koppelvorrichtungen erheblich erhöht werden.

Zur Datenreduktion sind eine Vielzahl von Verfahren bekannt. Bevorzugt wird-als Kodier-Dekodierverfahren das 2B/1Q-Verfahren oder 4B/3T-Verfahren angewendet. Dies sind in der Telekommunikationstechnik gängige Verfahren und sind beispielsweise aus Technik der Netze, Seite 406 unter der Überschrift "Der Übertragungscode" angegeben.

Vorzugsweise wird als Übertragungsverfahren ein ISDN-Datenübertragungsverfahren mit zumindest einem Nutzkanal durchgeführt. Auch dieses ISDN-Übertragungsverfahren mit einem Nutzkanal stellt ein gängiges und daher einfaches anzuwendendes Datenübertragungsverfahren dar und ist aus Technik der Netze, Seite 377 ff. bekannt.

Vorzugsweise werden die zwischen dem ersten digitalen Schutzgerät und dem zweiten digitalen Schutzgerät zu übertragenden Schutzgerätedaten als Nutzdaten im Nutzkanal übertragen. Dadurch muss keinerlei Umsetzung der zwischen der Koppelvorrichtung und dem jeweils zugeordneten Schutzgerät übertragenen Daten hinsichtlich des verwendeten Datenübertragungsprotokolls durchgeführt werden, sondern diese Daten werden ohne weitere Umsetzung als Übertragungsdaten im Nutzkanal übertragen.

Zur weiteren Erläuterung werden die erfindungsgemäße Anordnung und das erfindungsgemäße Verfahren anhand eines Ausführungsbeispiels in der Zeichnung erläutert.

Es zeigen
Figur 1 eine Anordnung zur Datenübertragung zwischen zwei digitalen Schutzgeräten,
Figur 2 eine Koppelvorrichtung und
Figur 3 die Datenübertragung zwischen einem Schutzgerät und einer Koppelvorrichtung.

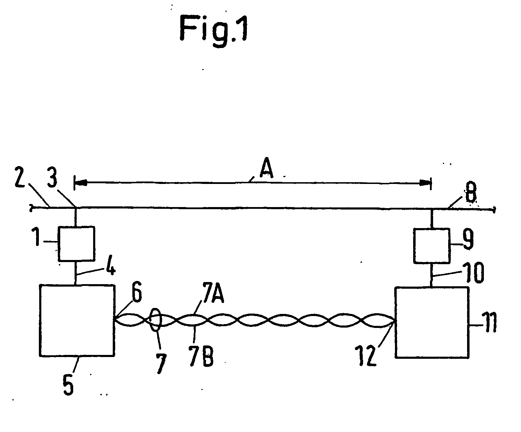

Die in Figur 1 dargestellte Anordnung zur Datenübertragung weist ein erstes digitales Schutzgerät 1 auf, das am einen Ende 3 eines Abschnitts A einer elektrischen Energieversorgungsleitung 2 angeordnet ist. Am anderen Ende 8 ist dazu ein zweites digitales Schutzgerät 9 vorgesehen. Die beiden digitalen Schutzgeräte 1 und 9 können beispielsweise als Differentialschutzgeräte ausgebildet sein und dienen der Überwachung des Abschnitts A der elektrischen Energieversorgungsleitung 2 hinsichtlich eines elektrischen Fehlers. Dazu werden zwischen den beiden Schutzgeräten 1 und 9 zur Ausübung ihrer Überwachungsfunktion dienende Schutzdaten ausgetauscht. Das digitale Schutzgerät 1 ist dazu über eine Datenleitung 4 an eine erste Koppelvorrichtung 5 angeschlossen. Die Koppelvorrichtung 5 wiederum ist mit einem Ende 6 einer elektrischen Datenübertragungsleitung 7 verbunden. Das zweite digitale Schutzgerät 9 ist über eine weitere Datenleitung 10 mit einer zweiten Koppelvorrichtung 11 verbunden. Diese ist mit dem anderen Ende 12 der elektrischen Datenübertragungsleitung 7 verbunden. Die elektrische Datenübertragungsleitung 7 ist einpaarig, also mit einem Paar, gebildet aus zwei elektrisch leitenden Adern 7A und 7B, ausgeführt.

Die über die Datenübertragungsleitung 7, die beiden Koppelvorrichtungen 5 und 11 und die beiden Datenleitungen 4 und 10 gebildete Datenverbindung dient dem Austausch der Schutzdaten zwischen den beiden Schutzgeräten 1 und 9 beispielsweise zur Ausübung ihrer Schutz- und Überwachungsfunktion des Abschnitts A der Energieversorgungsleitung 2. Anstelle eines der Schutzgeräte 1 oder 9 kann auch ein anderes Gegengerät, beispielsweise ein Personalcomputer, vorgesehen sein, das beispielsweise der Fernsteuerung oder Fernabfrage des verbleibenden Schutzgeräts 1 bzw. 9 dienen kann.

Die beiden Datenleitungen 4 und 10 können beliebig, beispielsweise als Lichtwellenleiterübertragungsstrecke, ausgeführt sein.

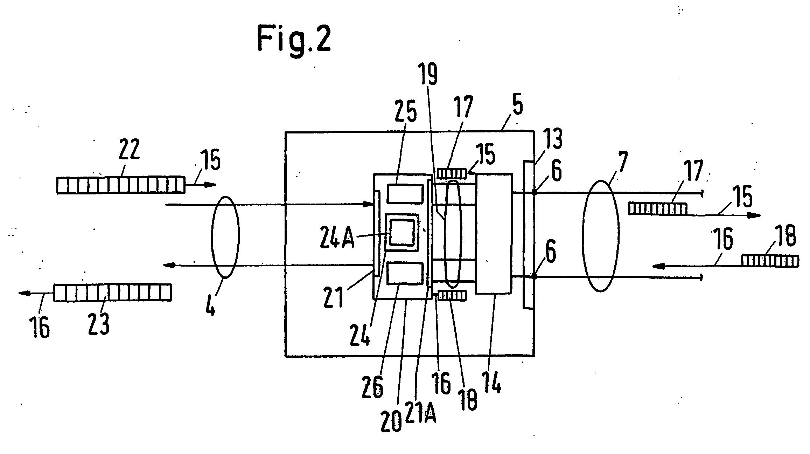

Die beiden Koppelvorrichtungen 5 und 11 sind derart ausgebildet, dass zwischen ihnen eine Übertragung von digitalen Übertragungsdaten 17, bzw. 18 (siehe Figur 2) in Sende- und Empfangsrichtung auf der einpaarigen Datenübertragungsleitung 7 nach Art einer digitalen Telekommunikationsdatenübertragung zwischen einerseits einer digitalen Netzabschlusseinrichtung eines digitalen Teilnehmerendabschlusses eines digitalen Telekommunikationsnetzes und andererseits einer mit der digitalen Netzabschlusseinrichtung über eine elektrische Teilnehmerabschlussleitung verbundenen digitalen Leitungsabschlusseinrichtung einer digitalen Vermittlungsstelle des digitalen Telekommunikationsnetzes durchführbar ist. Die zwischen den Schutzgeräten 1 und 9 zur Ausübung ihrer Überwachungsfunktion auszutauschenden Schutzdaten sind in den Übertragungsdaten 17, bzw. 18 (siehe Figur 2) enthalten.

Eine solche Datenübertragung wird beispielsweise bei einem ISDN-Telekommunikationsnetz vorgenommen und ist aus "Technik der Netze", Seite 377 ff. bekannt.

In Figur 2 ist die Koppelvorrichtung 5 stellvertretend für beide Koppelvorrichtungen 5 und 11 dargestellt; deren Aufbau entspricht dem Aufbau der Koppelvorrichtung 11. Die Koppelvorrichtung 5 weist eine sogenannte U-Schnittstelle 13 auf, an die das eine Ende 6 der einpaarigen elektrischen Datenübertragungsleitung 7 angeschlossen ist. Die Koppelvorrichtung 5 weist weiterhin einen Hybrid-Baustein 14 auf, der an die U-Schnittstelle 13 angeschlossen ist, und der der Trennung von in Senderichtung 15 zu sendenden digitalen Übertragungsdaten 17 und in Empfangsrichtung 16 übertragenen Übertragungsdaten 18 dient. Der Hybrid-Baustein 14 kann beispielsweise als Gabelschaltung ausgebildet sein. Der Hybrid-Baustein 14 ist über einen vierpoligen Anschluss 19 mit einer Ausgangsschnittstelle 21A eines ISDN-Bausteins 20 verbunden.

Der ISDN-Baustein 20 weist eine IOM2-Schnittstelle 21 auf, an die die Datenleitung 4 angeschlossen ist, über die die Koppelvorrichtung 7 mit dem ersten digitalen Schutzgerät 1 (s. Figur 1) verbunden ist. Über die Datenleitung 4 werden der IOM2-Schnittstelle 21 in Senderichtung 15 zu übertragende digitale Schutzgerätedaten 22 und in Empfangsrichtung zum digitalen Schutzgerät 1 zu übertragende Schutzgerätedaten 23 übertragen. Die Schutzgerätedaten.22 bzw. 23 können nach einem beliebigen Datenübertragungsprotokoll kodiert sein. Wichtig ist jedoch, dass sie in irgendeiner Form die eigentlich zu übertragenden Schutzdaten enthalten, die der Ausübung der Überwachungsfunktion durch die Schutzgeräte 1 und 9 dienen.

Die Schutzgerätedaten 22 werden in Übertragungsdaten 17 gemäss der U-Schnittstellenspezifikation (ISDN-Protokoll) umgesetzt und an den Hybrid-Baustein 14 zur Übertragung an die Datenübertragungsleitung 7 abgegeben. Ebenso werden die in Empfangsrichtung 16 empfangenen Übertragungsdaten 18 von dem Hybrid-Baustein 14 von den in Senderichtung 15 zu sendenden Übertragungsdaten 17 hinsichtlich ihrer Übertragungsrichtung getrennt und dem ISDN-Baustein 20 zugeführt. Dieser wandelt die Übertragungsdaten 18 in die Schutzgerätedaten 23 um und gibt sie über seine IOM2-Schnittstelle 21 und über die Datenleitung 4 an das Schutzgerät 1 ab.

Bei einer Übertragung zwischen einem Schutzgerät 1 bzw. 9 und einem digitalen Gegengerät anstelle eines der Schutzgeräte 1 bzw. 9 sind anstelle der Schutzdaten die eigentlichen, zwischen dem Gegengerät und dem verbleibenden Schutzgerät zu übertragenden Daten anzuordnen.

Der ISDN-Baustein 20 weist Mittel zur Echokompensation 24 mit einem adaptiven Transversalfilter 24A sowie Mittel zur Kodierung 25 (Kodiereinrichtung) der in Senderichtung 15 zu übertragenden Schutzgerätedaten 22 in Übertragungsdaten 17 und Mittel 26 zur Dekodierung (Dekodiereinrichtung) von in Empfangsrichtung 16 empfangenen Übertragungsdaten 18 in die Schutzgerätedaten 23 auf. Die Mittel zur Kodierung 25 sind so ausgelegt, dass sie in Abstimmung mit der entsprechenden Kodiereinrichtung 25 der Koppelvorrichtung 11 eine Verwürfelung der Übertragungsdaten 17 derart vornehmen, dass sie statistisch unabhängig von den in Empfangsrichtung 16 von der Koppelvorrichtung 11 empfangenen Übertragungsdaten 18 sind, so dass eine besonders wirksame Echokompensation mit dem adaptiven Transversalfilter 24A ermöglicht ist. Dieses Verfahren ist ebenfalls aus dem Stand der Technik beispielsweise "Technik der Netze", Seite 404 "Richtungstrennungsverfahren" bekannt. Da auch mit der Koppelvorrichtung 11 eine entsprechende "Verwürfelung" der Übertragungsdaten 18 vorgenommen wurde, wird eine entsprechende Rückverwürfelung durch die Dekodiereinrichtung 26 mit den Übertragungsdaten 18 durchgeführt.

Darüber hinaus sind die Kodiereinrichtung 25 und die Dekodiereinrichtung 26 derart ausgebildet, dass eine Datenreduktion der in Senderichtung 15 zu übertragenen Schutzgerätedaten 22 durchgeführt wird und dass eine entsprechende Expansion der in Empfangsrichtung 16 empfangenen Übertragungsdaten 18 durchgeführt wird. Dabei kommt das aus dem Stand der Technik bekannte 2B/1Q-Verfahren oder das 4B/3T-Verfahren zur Anwendung. Bei der Rückverwürfelung oder bei der Kodierung/Dekodierung wird im vorliegenden Fall gleichzeitig auch noch so verfahren, dass die Übertragungsdaten 17 bzw. 18 jeweils gleichanteilsfrei sind; dabei werden ebenfalls gängige verfahren angewendet. In "Technik der Netze", Seite 406 ist dies angesprochen. Selbstverständlich kann die Verwürfelung/Rückverwürfelung die Kodierung/Dekodierung und die Herstellung der Gleichstromfreiheit in jeweils einzelnen, voneinander getrennten Baueinheiten der Koppelvorrichtung 5 bzw. des ISDN-Bausteines 20 durchgeführt werden.

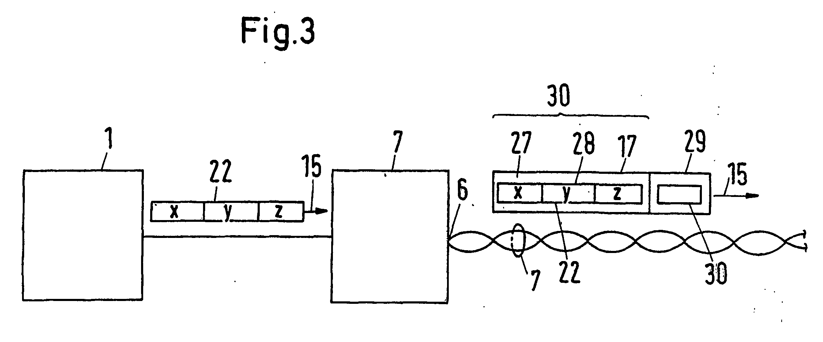

Bei der Datenübertragung zwischen den Koppelvorrichtungen 5 und 11 wird als Übertragungsverfahren ein ISDN-Datenübertragungsverfahren mit zumindest einem Nutzkanal 27 angewendet. Die Umsetzung der vom digitalen Schutzgerät 1 ausgesendeten Schutzgerätedaten 22 in die Übertragungsdaten 17 wird diesbezüglich anhand der Figur 3 veranschaulicht. Die Umsetzung der Schutzgerätedaten 23, die vom zweiten Schutzgerät 9 ausgesendet werden, erfolgt analog dazu. Die digitalen Schutzgerätedaten 22 werden zur Umsetzung der IOM2-Schnittstelle 21 des ISDN-Bausteines 20 (s. Figur 2) zugeführt und ohne weitere Umkodierung als Nutzdaten 28 im Nutzkanal 27 angeordnet.

Eine andere Möglichkeit zur Umsetzung der Schutzgerätedaten 22 in die Übertragungsdaten 17 ist, dass die nach ihrem Übertragungsprotokoll kodierten Schutzgerätedaten 22 zunächst vollständig dekodiert werden, um die in ihnen enthaltenen Schutzdaten zu erhalten. Zur Übertragung werden dann lediglich diese Schutzdaten an die IOM2-Schnittstelle 21 als zu übertragende Daten angelegt und als Nutzdaten 28 im Nutzkanal 27 angeordnet. Zur Dekodierung der Schutzgerätedaten 22 wäre dabei ein entsprechender Umsetzbaustein erforderlich, der der IOM2-Schnittstelle 21 des ISDN-Bausteins 20 vorgeschaltet sein müsste. Entsprechend müssten die von der IOM2-Schnittstelle 21 abgegebenen Schutzdaten erst zu den Schutzgerätedaten 23 nach dem für diese vorgesehenen Übertragungsprotokoll umgesetzt werden. Durch die in Figur 3 gezeigte unmittelbare Anordnung der Schutzgerätedaten 22 als Nutzdaten 28 im Nutzkanal 27 ist jedoch eine solche Umkodierung nicht erforderlich, und damit sind auch Umsetzbausteine nicht erforderlich.

Im vorliegenden Fall sind die Übertragungsdaten 17 als ein einziges in der ISDN-Datenübertragungstechnik übliches Datenpaket 29 dargestellt, wobei die digitalen Schutzgerätedaten 22 eine solche Länge aufweisen, dass sie vollständig im für den Nutzkanal 28 reservierten Teil 30 des Datenpakets 29 angeordnet werden können. Selbstverständlich werden bei einer kontinuierlichen Datenübertragung digitalen Schutzgerätedaten 22 auf mehrere Datenpakete 29 aufgeteilt und jeweils im für den Nutzkanal 27 reservierten Datenteil 30 jedes der Datenpakete 29 übertragen. Darüber hinaus ist anzumerken, dass bei der ISDN-Datenübertragungstechnik in der Regel Datenpakete 29 mit zwei Datenbereichen für zwei Nutzkanäle vorgesehen sind. Selbstverständlich können dann digitale Schutzgerätedaten 22 auf die beiden Nutzkanäle aufgeteilt werden. In dem Datenpaket 29 ist ebenso selbstverständlich ein Bereich zur Übertragung von Steuer- und Signalisierungsinformationen 30 vorgesehen, wie sie bei einer solchen digitalen Datenübertragung üblich sind.

Die Übertragung der Übertragungsdaten 17 bzw. 18 kann mit einer Datenübertragungsgeschwindigkeit von beispielsweise 160 kbit/s erfolgen. Die Datenübertragungsleitung 7 kann je nach Leitereigenschaft der Einzelleiter des Paares eine Länge von größer als 7 km aufweisen.

## Patentansprüche

1. Anordnung zur Datenübertagung von digitalen Übertragungsdaten (17,18) zwischen einem ersten digitalen Schutzgerät (1) und einem zweiten digitalen Schutzgerät (9) an einem Abschnitt (A) einer Energieversorgungsleitung (2) in Senderichtung (15) und in Empfangsrichtung (16), wobei das erste digitale Schutzgerät (1) über eine erste Koppelvorrichtung (5) an ein Ende (6) einer elektrischen Datenübertragungsleitung (7) angeschlossen ist und das zweite digitale Schutzgerät (9) über eine zweite Koppelvorrichtung (11) an das andere Ende (12) der elektrischen Datenübertragungsleitung (7) angeschlossen ist, wobei
die Datenübertragungsleitung (7) eine einpaarige Leitung ist, **dadurch gekennzeichnet dass** beide Koppelvorrichtungen (5,11) derart ausgebildet sind, dass zwischen ihnen eine Übertragung von digitalen Übertragungsdaten in Sende- und Empfangsrichtung (15 bzw. 16) auf der einpaarigen Datenübertragungsleitung (7) nach Art einer digitalen Telekommunikationsdatenübertragung zwischen einerseits einer digitalen Netzabschlusseinrichtung eines digitalen Teilnehmerendanschlusses eines digitalen Telekommunikationsnetzes und andererseits einer mit der digitalen Netzabschlusseinrichtung über eine elektrische Teilnehmeranschlussleitung verbundenen digitalen Leitungsabschlusseinrichtung einer digitalen Vermittlungsstelle des digitalen Telekommunikationsnetzes durchführbar ist.

2. Anordnung nach Anspruch 1,
**dadurch gekennzeichnet, dass**
jede Koppelvorrichtung (5,11) Mittel (14) zur Trennung der in Senderichtung (15) gesendeten Übertragungsdaten (17) von den in Empfangsrichtung (16) übertragenen Übertragungsdaten (18), Mittel (24) zur Echokompensation von auf der Datenübertragungsleitung auftretenden Übertragungsdatenechos und Mittel (25,26) zur Verwürfelung und der zu übertragenden digitalen Übertragungsdaten (17,18) vorgesehen sind.

3. Anordnung nach Anspruch 1,
**dadurch gekennzeichnet, dass** die Koppelvorrichtungen (5,11) Mittel (25,26) zur Datenreduktion der zu übertragenden digitalen Übertragungsdaten (17,18) aufweisen.

4. Anordnung nach Anspruch 1 oder 2,
**dadurch gekennzeichnet, dass**
die Mittel (24) zur Echokompensation ein adaptives Transversalfilter (24A) aufweisen.

5. Anordnung nach einem der Ansprüche 1 bis 4,
**dadurch gekennzeichnet, dass**
die Koppelvorrichtungen (5,11) jeweils eine U-Schnittstelle (13) aufweisen, an die die einpaarige Datenübertragungsleitung (7) angeschlossen ist.

6. Anordnung nach Anspruch 5,
**dadurch gekennzeichnet, dass**
die Koppelvorrichtungen (5,11) jeweils einen ISDN-Baustein (20) mit einer IOM2-Schnittstelle (21) und einer Ausgangsschnittstelle (21A) aufweist, wobei die IOM2-Schnittstelle (21) mit dem jeweiligen digitalen Schutzgeräten (1 bzw. 9) verbunden ist und die Ausgangsschnittstelle (21A) mit der einpaarigen Datenübertragungsleitung (7) verbunden ist.

7. Anordnung nach Anspruch 6,
**dadurch gekennzeichnet, dass**
die digitalen Schutzgeräte (1 bzw. 9) jeweils unmittelbar mit der jeweiligen IOM2-Schnittstelle (21) verbunden sind.

8. Anordnung nach einem der vorhergehenden Ansprüche,
**dadurch gekennzeichnet, dass**
die einpaarige Datenübertragungsleitung (7) parallel zum Abschnitt (A) der Energieversorgungsleitung (2) vorgesehen ist.

9. Verfahren zur Übertragung von Übertragungsdaten (17,18) in Sende- und Empfangsrichtung (15 bzw. 16) zwischen einem ersten digitalen Schutzgerät (1) und einem zweiten digitalen Schutzgerät (2), die voneinander entfernt und an einem Abschnitt (A) einer Energieversorgungsleitung (2) angeordnet sind und die über jeweils eine zugeordnete Koppelvorrichtung (5,11) an jeweils einem Ende (6,12) einer einpaarigen elektrischen Datenübertragungsleitung (7) angeschlossen sind, **dadurch gekennzeichnet dass** die Übertragungsdaten (17,18) zwischen den Koppelvorrichtungen (5,11) in Sende- und Empfangsrichtung (15 bzw. 16) auf der einpaarigen Datenübertragungsleitung (7) nach Art einer digitalen Telekommunikationsdatenübertragung zwischen einerseits einer digitalen Netzabschlusseinrichtung eines digitalen Teilnehmerendanschlusses eines digitalen Telekommunikationsnetzes und anderseits einer mit der digitalen Netzabschlusseinrichtung über eine elektrische Teilnehmeranschlussleitung verbundenen digitalen Leitungsabschlusseinrichtung einer digitalen Vermittlungsstelle des digitalen Telekommunikationsnetzes übertragen werden.

10. Verfahren nach Anspruch 9,
**dadurch gekennzeichnet, dass**
bei der Datenübertragung zwischen den beiden Koppelvorrichtungen (5,11) zur Trennung der Senderichtung (15) von der Empfangsrichtung (16) ein Zeitgetrenntlageverfahren durchgeführt wird.

11. Verfahren nach Anspruch 9,
**dadurch gekennzeichnet, dass**
bei der Datenübertragung zwischen den beiden Koppelvorrichtungen (5,11) in jeder der Koppelvorrichtungen (5,11) eine Trennung der Senderichtung (15) von der Empfangsrichtung (16) nach dem Echokompensationsverfahren durchgeführt wird, wobei ein Verwürfelungsverfahren zur Herstellung der statistischen Unabhängigkeit der in Senderichtung (15) zu übertragenden Übertragungsdaten (17) von den in Empfangsrichtung (16) übertragenden Übertragungsdaten (18) durchgeführt wird.

12. Verfahren nach Anspruch 9, 10 oder 11,
**dadurch gekennzeichnet, dass**
bei der Datenübertragung ein Kodier/Dekodierverfahren zu Datenreduktion durchgeführt wird.

13. Verfahren nach Anspruch 12,
**dadurch gekennzeichnet, dass**
als Kodier/Dekodierverfahren das 2B/1Q-Verfahren oder das 4B/3T-Verfahren angewendet wird.

14. Verfahren nach einem der Ansprüche 10 bis 13,
**dadurch gekennzeichnet, dass**
als Übertragungsverfahren ein ISDN-Datenübertragungsverfahren mit zumindest einem Nutzkanal (27) angewendet wird.

15. Verfahren nach Anspruch 14,
**dadurch gekennzeichnet, dass**
die zwischen dem ersten digitalen Schutzgerät (1) und dem zweiten digitalen Schutzgerät (2)zu übertragenden Schutzgerätedaten (22,23) als Nutzdaten (28) im Nutzkanal (27) übertragen werden.

## Claims

1. Arrangement for the data transmission of digital transmission data (17, 18) between a first digital protective device (1) and a second digital protective device (9) on a section (A) of a power supply line (2) in a transmission direction (15) and in a reception direction (16), the first digital protective device (1) being connected to one end (6) of an electrical data transmission line (7) via a first interconnect device (5), and the second digital protective device (9) being connected to the other end (12) of the electrical data transmission line (7) via a second interconnect device (11),
the data transmission line (7) being a single-pair line,
**characterized in that** the two interconnect devices (5, 11) are in a form such that it is possible to transmit between them digital transmission data in the transmission and reception directions (15 and 16) on the single-pair data transmission line (7) in the manner of digital telecommunication data transmission between, firstly, a digital network terminating device on a digital subscriber terminal in a digital telecommunication network and, secondly, a digital line terminating device, connected to the digital network terminating device via an electrical subscriber line, in a digital switching centre in the digital telecommunication network.

2. Arrangement according to Claim 1,
**characterized in that**
each interconnect device (5, 11) has means (14) for separating the transmission data (17) sent in the transmission direction (15) from the transmission data (18) transmitted in the reception direction (16), means (24) for echo cancellation of transmission data echoes arising on the data transmission line, and means (25, 26) for scrambling the digital transmission data (17, 18) to be transmitted.

3. Arrangement according to Claim 1,
**characterized in that** the interconnect devices (5, 11) have means (25, 26) for data reduction of the digital transmission data (17, 18) which are to be transmitted.

4. Arrangement according to Claim 1 or 2,
**characterized in that**
the means (24) for echo cancellation have an adaptive transverse filter (24A).

5. Arrangement according to one of Claims 1 to 4,
**characterized in that**
the interconnect devices (5, 11) each have a U interface (13) to which the single-pair data transmission line (7) is connected.

6. Arrangement according to Claim 5,
**characterized in that**
the interconnect devices (5, 11) each have an ISDN module (20) with an IOM2 interface (21) and an output interface (21A), the IOM2 interface (21) being connected to the respective digital protective device (1 or 9), and the output interface (21A) being connected to the single-pair data transmission line (7).

7. Arrangement according to Claim 6,
**characterized in that**
the digital protective devices (1 and 9) are each connected directly to the respective IOM2 interface (21).

8. Arrangement according to one of the preceding claims,
**characterized in that**
the single-pair data transmission line (7) is provided in parallel with the section (A) of the power supply line (2).

9. Method for transmitting transmission data (17, 18) in a transmission direction and a reception direction (15 and 16) between a first digital protective device (1) and a second digital protective device (2) which are arranged apart from one another and on a section (A) of a power supply line (2) and which are connected via a respective associated interconnect device (5, 11) to one respective end (6, 12) of a single-pair electrical data transmission line (7), **characterized in that** the transmission data (17, 18) are transmitted between the interconnect devices (5, 11) in the transmission and reception directions (15 and 16) on the single-pair data transmission line (7) in the manner of digital telecommunication data transmission between, firstly, a digital network terminating device on a digital subscriber terminal in a digital telecommunication network and, secondly, a digital line terminating device, connected to the digital network terminating device via an electrical subscriber line, in a digital switching centre in the digital telecommunication network.

10. Method according to Claim 9,
**characterized in that**
the data transmission between the two interconnect devices (5, 11) involves a time-division method being carried out in order to separate the transmission direction (15) from the reception direction (16).

11. Method according to Claim 9,
**characterized in that**
the data transmission between the two interconnect devices (5, 11) involves the transmission direction (15) being separated from the reception direction (16) in each of the interconnect devices (5, 11) on the basis of the echo cancellation method, a scrambling method being carried out to produce the statistical independence of the transmission data (17) to be transmitted in the transmission direction (15) with respect to the transmission data (18) transmitted in the reception direction (16).

12. Method according to Claim 9, 10 or 11,
**characterized in that**
a coding/decoding method is carried out during data transmission for the purpose of data reduction.

13. Method according to Claim 12,
**characterized in that**
the coding/decoding method used is the 2B/1Q method or the 4B/3T method.

14. Method according to one of Claims 10 to 13,
**characterized in that**
the transmission method used is an ISDN data transmission method using at least one user channel (27).

15. Method according to Claim 14,
**characterized in that**
the protective device data (22, 23) to be transmitted between the first digital protective device (1) and the second digital protective device (2) are transmitted as user data (28) in the user channel (27).

## Revendications

1. Dispositif pour la transmission de données numériques (17, 18) entre un premier appareil protecteur numérique (1) et un deuxième appareil protecteur numérique (9) sur un tronçon (A) d'une ligne d'alimentation en énergie (2) dans le sens d'émission (15) et dans le sens de réception (16), le premier appareil protecteur numérique (1) étant raccordé par l'intermédiaire d'un premier dispositif de connexion (5) à une extrémité (6) d'une ligne de transmission de données électrique (7) et le deuxième appareil protecteur numérique (9) étant raccordé par l'intermédiaire d'un deuxième dispositif de connexion (11) à l'autre extrémité (12) de la ligne de transmission de données électrique (7) et la ligne de transmission de données (7) étant une ligne monopaire,
**caractérisé par le fait que** les deux dispositifs de connexion (5, 11) sont conçus de telle sorte qu'il peut s'effectuer entre eux une transmission de données numériques dans le sens d'émission (15) et dans le sens de réception (16) sur la ligne de transmission de données monopaire (7) à la manière d'une transmission de données de télécommunication numérique entre d'une part un dispositif terminal de réseau numérique d'un raccordement d'abonné numérique d'un réseau de télécommunication numérique et d'autre part un dispositif terminal de ligne numérique, relié par l'intermédiaire d'une ligne de raccordement d'abonné électrique au dispositif terminal de réseau numérique, d'un centre de commutation numérique du réseau de télécommunication numérique.

2. Dispositif selon la revendication 1,
**caractérisé par le fait que** chaque dispositif de connexion (5, 11) comporte des moyens (14) pour séparer les données de transmission (17) émises dans le sens de l'émission (15) des données de transmission (18) transmises dans le sens de la réception (16), des moyens (24) pour compenser des échos de transmission de données apparaissant sur la ligne de transmission de données et des moyens (25, 26) pour le brouillage des données de transmission numériques à transmettre (17, 18).

3. Dispositif selon la revendication 1,
**caractérisé par le fait que** les dispositifs de connexion (5, 11) comportent des moyens (25, 26) pour la réduction des données de transmission numériques à transmettre (17, 18).

4. Dispositif selon la revendication 1 ou 2,
**caractérisé par le fait que** les moyens de compensation d'écho (24) comportent un filtre transversal adaptatif (24A).

5. Dispositif selon l'une des revendications 1 à 4,
**caractérisé par le fait que** les dispositifs de connexion (5, 11) comportent chacun une interface U (13) à laquelle la ligne de transmission de données monopaire (7) est raccordée.

6. Dispositif selon la revendication 5,
**caractérisé par le fait que** les dispositifs de connexion (5, 11) comportent chacun un composant RNIS (20) avec une interface IOM2 (21) et avec une interface de sortie (21A), l'interface IOM2 (21) étant reliée aux appareils protecteurs numériques respectifs (1 ou 9) et l'interface de sortie (21A) étant reliée à la ligne de transmission de données monopaire (7) .

7. Dispositif selon la revendication 6,
**caractérisé par le fait que** les appareils protecteurs numériques (1 ou 9) sont reliés chacun directement à l'interface IOM2 respective (21).

8. Dispositif selon l'une des revendications précédentes,
**caractérisé par le fait que** la ligne de transmission de données monopaire (7) est prévue en parallèle avec le tronçon (A) de la ligne d'alimentation en énergie (2).

9. Procédé pour la transmission de données numériques (17, 18) dans le sens d'émission (15) et dans le sens de réception (16) entre un premier appareil protecteur numérique (1) et un deuxième appareil protecteur numérique (9) qui sont distants l'un de l'autre et placés sur un tronçon (A) d'une ligne d'alimentation en énergie (2) et qui sont raccordés chacun par l'intermédiaire d'un dispositif de connexion associé (5, 11) chacun à une extrémité (6, 12) d'une ligne de transmission de données électrique monopaire (7),
**caractérisé par le fait qu'**on transmet les données de transmission (17, 18) entre les dispositifs de connexion (5, 11) dans le sens d'émission (15) et dans le sens de réception (16) sur la ligne de transmission de données monopaire (7) à la manière d'une transmission de données de télécommunication numérique entre d'une part un dispositif terminal de réseau numérique d'un raccordement d'abonné numérique d'un réseau de télécommunication numérique et d'autre part un dispositif terminal de ligne numérique, relié par l'intermédiaire d'une ligne de raccordement d'abonné électrique au dispositif terminal de réseau numérique, d'un centre de commutation numérique du réseau de télécommunication numérique.

10. Procédé selon la revendication 9,
**caractérisé par le fait que**, lors de la transmission de données entre les deux dispositifs de connexion (5, 11), on effectue un procédé à l'alternat pour la séparation entre sens d'émission (15) et sens de réception (16).

11. Procédé selon la revendication 9,
**caractérisé par le fait que**, lors de la transmission de données entre les deux dispositifs de connexion (5, 11), on effectue dans chacun des dispositifs de connexion (5, 11) une séparation entre le sens d'émission (15) et le sens de réception (16) selon le procédé de compensation d'écho, un procédé de brouillage étant mis en oeuvre pour réaliser l'indépendance statistique entre les données de transmission (17) à transmettre dans le sens d'émission (15) et les données de transmission (18) à transmettre dans le sens d'émission (16).

12. Procédé selon la revendication 9, 10 ou 11,
**caractérisé par le fait que**, lors de la transmission de données, on effectue un procédé de codage / décodage pour la réduction de données.

13. Procédé selon la revendication 12,
**caractérisé par le fait que** l'on utilise comme procédé de codage / décodage le procédé 2B / 1Q ou le procédé 4B / 3T.

14. Procédé selon l'une des revendications 10 à 13,
**caractérisé par le fait que** l'on utilise comme procédé de transmission un procédé de transmission de données RNIS avec au moins un canal utile (27).

15. Procédé selon la revendication 14,
**caractérisé par le fait que** l'on transmet les données d'appareil protecteur (22, 23) à transmettre entre le premier appareil protecteur (1) et le deuxième appareil protecteur (9) comme données utiles (28) dans le canal utile (27).
